Europäisches Patentamt

(19) European Patent Office

Office européen des brevets

(11) Veröffentlichungsnummer: **0 003 823**
**B1**

(12) **EUROPÄISCHE PATENTSCHRIFT**

(45) Veröffentlichungstag der Patentschrift: **07.12.83**

(21) Anmeldenummer: **79100487.2**

(22) Anmeldetag: **20.02.79**

(51) Int. Cl.³: **H 04 N 7/16,** H 04 N 7/10, H 04 H 1/02

(54) **Anlage für interaktives Kabelfernsehen.**

(30) Priorität: **22.02.78 DE 2807986**

(43) Veröffentlichungstag der Anmeldung:
**05.09.79 Patentblatt 79/18**

(45) Bekanntmachung des Hinweises auf die Patenterteilung:
**07.12.83 Patentblatt 83/49**

(84) Benannte Vertragsstaaten:
**BE CH DE FR GB IT LU NL SE**

(56) Entgegenhaltungen:
FR - A - 2 264 447
FR - A - 2 268 418
FR - A - 2 347 834
US - A - 3 668 307

IEEE TRANSACTIONS ON COMMUNICATIONS, Vol. COM-23, Nr. 1, Januar 1975, New York, USA, K ROSE et al.: "Design of a switched broad-band communications network for interactive services", Seiten 49-55

(73) Patentinhaber: **Heinrich-Hertz-Institut für Nachrichtentechnik Berlin GmbH Einsteinufer 37 D-1000 Berlin 10 (DE)**

(72) Erfinder: **Schnee, Rolf Weskammstrasse 4 D-1000 Berlin 48 (DE)**
Erfinder: **Kraus, Franz Jahnstrasse 31 D-1000 Berlin 47 (DE)**
Erfinder: **Kiel, Friedrich Elmshorner Strasse 18 D-1000 Berlin 37 (DE)**
Erfinder: **Kliem, Helmut Lohengrinstrasse 10 D-1000 Berlin 39 (DE)**
Erfinder: **Krick, Wolfgang Albertinenstrasse 29 D-1000 Berlin 37 (DE)**
Erfinder: **Landgraf, Herbert Bartningstrasse 8 D-6100 Darmstadt (DE)**

(74) Vertreter: **Wolff, Konrad Einsteinufer 37 D-1000 Berlin 10 (DE)**

**0 003 823**

(56) Entgegenhaltungen:
**IEEE TRANSACTIONS ON COMMUNICATIONS,
Vol. COM-23, Nr. 1, Januar 1975, New York,
USA, A.G. HARE et al.: "Multipurpose wide-band
local distribution - proposals for an integrated
system", Seiten 42-48
Rundfunktechnische Mitteilungen 20(1976), 5,
173-182**

Anlage für interaktives Kabelfernsehen

Die Erfindung bezieht sich auf eine Anlage für interaktives Kabelfernsehen mit einem in Versorgungsbereiche mit je einer zugeordneten Knotenstelle gegliederten Gesamtversorgungsgebiet, dessen Kabelnetz in der teilnehmernahen Netzebene Sternstruktur und in teilnehmerferneren Netzebenen zumindest teilweise Baumstruktur aufweist.

Bei solchen Anlagen soll neben der herkömmlichen Verteilung von Hörrundfunk- und Fernsehprogrammen ein individueller Nachrichtenaustausch zwischen Teilnehmer und Kabelfernsehzentrale stattfinden. Je nachdem, ob derartige Anlagen neu zu errichten oder bereits vorhandene technische Einrichtungen zu erweitern und Netze bisheriger Verteilanlagen zu modifizieren sind, ergeben sich mehr oder weniger unterschiedliche Konzepte für die technische Gestaltung. Dabei ist die Anzahl der zur Verfügung zu stellenden Verteil- und individuellen Dienste sowie die Anzahl und das Verkehrsaufkommen der Teilnehmer von ausschlaggebender Bedeutung.

Eine Anlage gemäß dem Oberbegriff des Patentanspruchs 1 ist aus IEEE Transactions COM-23 (1975) 1 (Januar) 49—55 bekannt. Bei dem Kabelnetz dieser bekannten Anlage handelt es sich um eine Überlagerung von zwei autonomen Netzen, nämlich eines Kabelverteilnetzes üblicher Art und eines Vermittlungsnetzes, das Punkt-zu-Punkt-Verbindungen ermöglicht. Während das Verteilnetz auf jeden Fall in der teilnehmerferneren Netzebene zwischen einer Kopfstation (Cablecast Distribution Center) und teilnehmernahen Vermittlungsstellen (Local Exchange, Commercial Local Exchange, Apartments with Local Exchange) Baumstruktur aufweist, besitzt das Vermittlungsnetz dort, d.h. zwischen einer zentralen Vermittlungsstelle (Central Exchange) und den teilnehmernahen Vermittlungsstellen, Sternstruktur. Ein wesentliches Merkmal dieses als Raum-Multiplex-Anlage konzipierten Netzes besteht in der Möglichkeit, Erweiterungen mit geringem Kostenaufwand für höheres Angebot interaktiver Dienste vornehmen zu können, indem das Vermittlungsnetz sowohl für Einwegals auch für Zweiwegdienste verwendet wird. Dazu können über Stufenschalter in den teilnehmernahen Vermittlungsstellen individuelle Teilnehmerleitungen mit jedem Kanal verbunden werden. Kreuzschienenverteiler in zentralen und in den teilnehmernahen Vermittlungsstellen dienen für die Durchschaltung von Breitbandprogrammen, auf die die einzelnen Teilnehmer über Leitungen zugreifen können, die an einem Kanal eines Stufenschalters enden. In welcher Art und Weise eine weitere, höhere Netzebene, die gegebenenfalls eine Kabelfernsehzentrale enthalten könnte, ausgestaltet sein und betrieben werden soll, ist dieser Veröffentlichung nicht zu entnehmen.

Aus der Darstellung und der Beschreibung, die sich auf die Kopfstation und die zentrale Vermittlungsstelle beziehen, ist der Schluß zu ziehen, daß zu mindest auf gleicher Hierarchiestufe weitere Kopfstationen und zentrale Vermittlungsstellen vorhanden sind bzw. vorhanden sein müssen.

Nach dem aus IEEE Transactions COM-23 (1975) 1 (Januar) 42—48 bekannten Vorschlag sollen integrierte Systeme mit einem einzigen breitbandigen Übertragungsmedium zur Anwendung kommen, bei denen Ringstrukturen aus Vielfachverteilleitungen zu bilden sind, auf denen der gesamte Verkehr zusammengefaßt, übertragen und vermittelt wird. Danach handelt es sich um eine Dezentralisierung der Intelligenz des Systems, wenn bis hinab in die Ortsvermittlungsebenen eine digitale Übertragungs- und Vermittlungstechnik eingeführt werden kann. Bei derartigen Systemen ist jedoch—neben der Störanfälligkeit und der geringen Ausfallsicherheit bei Ringstrukturen—zu berücksichtigen, daß der gesamte Verkehr bei allen angeschlossenen Teilnehmern vorbeigeführt werden muß, d.h. die Grenzen der Übertragungskapazität schnell erreicht und dennoch für viele Teilnehmer keine für sie bestimmten oder von ihnen gewünschten Nachrichten enthalten sind.

Möglichkeiten und Probleme der technischen Gestaltung des Zweiweg-Kabelfernsehens sind auch in Rundfunktechnische Mitteilungen 20 (1976), 5, 173—182 aufgezeigt. Hinsichtlich der Netzgestaltung sind dort solche Strukturen angegeben, die von dem für ein reines Verteilsystem günstigsten Baummetz ausgehen. Eine Erhöhung der insbesondere für die individuellen Dienste erforderlichen Übertragungskapazität soll danach beispielsweise durch zweite parallele Kabel im Baumnetz oder gegebenenfalls durch eigene Kabel erfolgen, mit denen Teile des Baumnetzes sternförmig oder über Ringleitungen mit der Zentrale verbunden werden. Diese Maßnahmen führen zu einer Baum-Stern-Struktur, einer Stern-Baum-Struktur oder zu einer Ring-Baum-Struktur in den aktiven Netzebenen, in denen Verstärkerstellen vorgesehen sind. Für die teilnehmernahen passiven Netzebenen, die einen erheblichen Leitungsaufwand erfordern, werden zwei Alternativen hervorgehoben:

— Bei einer Verlagerung des Aufwandes in die Übertragungssysteme kann die Baumstruktur beibehalten werden. Multiplexbildung sowohl im Frequenz als auch im Zeitbereich führt zu einer großen Anzahl individueller Datenund Festbildkanäle.
— Von einem Sternpunkt führt zu jedem Teilnehmer ein Kabel. Der Sternpunkt ist die Schnittstelle zum übergeordneten Baumnetz. Das Übertragungsband dieses Kabels ist—wie im übergeordneten Baumnetz—für Vor- und Rückrichtung zweigeteilt.

Das Sternnetz bietet im Vergleich zum Baumnetz eine größere Sicherheit vor Abhören und Störungen des Rückkanals sowie vor Schwarzsehen gebührenpflichtiger Programme. Dazu ist eine besondere Verschlüsselung (Scrambling) nicht erforderlich.

Der Erfindung liegt die Aufgabenstellung zugrunde, für interaktives Kabelfernsehen ein technisches Gesamtsystem zu schaffen, in dem vielen Teilnehmern ein vielfältiges Inhaltsangebot in einem breitbandig vermittelnden Netz auf ökonomisch vertretbarer Basis bereit gestellt wird. Das bedeutet, die Dienstekategorien

— uneingeschränkte Informationsverteilung,
— eingeschränkte Informationsverteilung,
— zentrale Informationssammlung,
— Informationsverteilung auf Anfrage und
— Dialog mit der Zentrale

erfordern für eine wirtschaftliche Bewältigung eine sinnvolle Netzgestaltung sowohl für die Übertragung von der Zentrale zu den Teilnehmern, als auch für den Rückweg zur Zentrale und die dazu geeignete Konzeption der Übertragungssysteme, in denen das Verteil- und Sammelsystem für Fernsehsignale, digitale Übertragungssysteme, Übertragungsverfahren, Einrichtungen beim Teilnehmer und in der Zentrale sowie Festbild-Übertragungssysteme enthalten sind.

Die Erfindung löst diese Aufgabe durch

— eine Zentrale für das Gesamtversorgungsgebiet und durch:
— eine Überlagerung von Kabelnetzen in Baum- und Sternstruktur in der höchsten Netzebenen zwischen der Zentrale und den Knotenstellen der Versorgungsbereiche, wobei die Baumstruktur aus einem allen Knotenstellen gemeinsamen Verbindungskabel und die Sternstruktur aus zweiten, vom gemeinsamen Verbindungskabel sowie auch voneinander unabhängigen und für jede Knotenstelle eigenen Verbindungskabeln gebildet ist,
— autonome parallel Kabel in Baumstruktur in den teilnehmerferneren Netzebenen zwischen den Knotenstellen und Vorfeldeinrichtungen, wobei in diesen Netzebenen die Verbindungskabel aus der höchsten Netzebenen den parallelen autonomen Kabeln entsprechend zugeordnet sind,
— an sich bekannte Sternnetze mit Einfachkabeln in der teilnehmernahen Netzebene zwischen den Vorfeldeinrichtungen und Teilnehmeranschlüssen; sowie durch
— Mehrfachausnutzung der auf den Kabeln für Analog- bzw. Digitalsignale bereitgestellten Übertragungswege sowohl in Richtung von der Zentrale zu den Teilnehmeranschlüssen als auch zumindest teilweise in Richtung von den Teilnehmeranschlüssen zur Zentrale als Ab- bzw. Aufwärtskanäle.

Damit lassen sich folgende Anforderungen erfüllen:

— Bis zu 10% der Teilnehmer können zu gleicher Zeit interaktiv tätig sein;
— für die uneingeschränkte Informationsverteilung lassen sich auf jeden Fall mehrere Fernsehkanäle in Abwärtsrichtung übertragen;
— für die individuelle Informationsverteilung sind Fernseh- und Datenkanäle in Abwärts- und Aufwärtsrichtung vorgesehen, so daß insbesondere auch Dienste angeboten werden können, die Video- Stand- und Bewegtbilder als Information enthalten;
— das Kanalangebot ist wirtschaftlich, d.h. Kanäle werden in einer der Nachfrage weitgehend entsprechenden Anzahl mit geringem technischen Aufwand bereitgestellt;
— systemfremde Netze brauchen—auch für Rückkanäle—nicht mit einbezogen zu werden;
— Einrichtungen, die über die unbedingt notwendige Ausstattung eines interaktiven Heimkommunikationsplatzes hinausgehen, können in der Anlaufphase, bei entsprechend geringere Dienstevielfalt, in der Zentrale oder in höheren Netzebenen vorgesehen werden;
— das Gesamtversorgungsgebiet kann in geeignete Versorgungsbereiche gegliedert werden; die örtliche Lage der Zentrale ist jedoch üblicherweise nicht frei wählbar;
— das Übertragungssystem arbeitet ohne Vermittlungsstellen in den höheren Netzebenen und ist weitestgehend mit baugleichen Übertragungseinrichtungen auszurüsten;
— Vertaulichkeit wird gewährleistet, Störungen aus der Teilnehmerebenen werden vom Sammelnetz abgehalten und unerlaubte Zugriffe verhindert;
— eine Telekommunikation von Teilnehmer zu Teilnehmer ist im Prinzip möglich, kann jedoch durch einfache Maßnahmen in der Zentrale ausgeschlossen werden.

Mit der Struktur dieses Netzes ist die Konzeption für das entsprechende Übertragungssystem eng verbunden. Dabei ist insbesondere darauf hinzuweisen, daß für die beiden überlagerten Netze die teilnehmernahe Netzebene in Sternstruktur nur einfach, also für die beiden übergeordneten Netze gemeinsam ausgelegt ist. Über das allen Versorgungsbereichen gemeinsame Kabel können die parallelen Versorgungsbereiche z.B. mit 12 Fernsehkanälen für Verteilprogramme versorgt werden. Außerdem bietet dieses autonome Netz die Möglichkeit, breitbandige Aufwärtskanäle sowie schmalbandige Kanäle in Auf- und Abwärtsrichtung zu übertragen. Dieser autonome Teil des Netzes eignet sich also sowohl für die Abwicklung von Diensten auf der Grundlage eines Datendialogs und die Rückübertragung von Fernsehsignalen zur Zentrale als auch insbesondere für die uneingeschränkte und in begrenztem Rahmen für eingeschränkte Informationsverteilung. Da jeder Versorgungsbereich über ein zweites, eigenes Kabel des anderen autonomen Netzes mit der Zentrale verbunden ist, können die in den betreffenden Versorgungsbereich fallenden individuellen Fernsehsignale über dieses zweite Netz verteilt werden. Es handelt sich damit also um ein Zwikabelnetz und ein Übertragungssystem, das Datendialoge und eine uneingeschränkte Verteilung ohne Unterscheidung der einzelnen Versorgungsbereiche und eine individuelle Verteilung für jeden Versorgungsbereich, den dort herrschenden Erfordernissen entsprechend, ermöglicht.

Die Übertragung der Fernseh- und Datenkanäle in Aufwärts- und Abwärtsrichtung in dem allen versorgungsbereichen gemeinsamen Netz ermöglicht den Einsatz baugleicher Frequenzübernahmeweichen. Es können auch die verwendeten Kabel und Verstärker der beiden Netze für uneingeschränkte und für individuelle Informationsverteilung baugleich sein. Werden für die Rückkanalübertragung Verstärker mit gleicher Verstärkung wie in Verteilrichtung eingesetzt, lassen sich gegenüber der Verteilrichtung zwei von drei Verstärkerstellen einsparen, da im Frequenzbereich der Rückkanalübertragung geringere Kabeldämpfung herrscht.

Die vorteilhaften Eigenschaften einer Kabelfernseh-Anlage mit einer solchen Netzstruktur und dem entsprechenden Übertragungssystem sowie der bevorzugten Ausführungsform der Erfindung, auf die sich die abhängigen Ansprüche beziehen, gehen aus den nachfolgenden Erläuterungen näher hervor.

Von besondere Bedeutung sind die Vorfeldeinrichtungen zwischen den autonomen parallelen Kabeln der teilnehmerferneren Netzebenen und den Einfachkabeln der Sternnetze in der teilnehmernahen Netzebene, die jeweils ausgerüstet sind:

— mit einer Frequenzweiche und mit einem Empfangskanalumsetzer, die an die Kabel der teilnehmerferneren Netzebenen angeschlossen sind,
— mit einern Signalmultiplexeinrichtung, die an das zum Teilnehmeranschluß führende Einfachkabel angeschlossen ist, und
— mit einer Empfangseinrichtung, Schalteinrichtungen und einem Sendekanalumsetzer für die Selektion der für einen Teilnehmeranschluß bestimmten Abwärtskanäle bzw. die Zuweisung von Aufwärtskanälen für von den Teilnehmeranschlüssen in das Netz abgesetzt Nachrichtenflüsse.

Im Gegensatz zu einem reinen Verteilnetz, in dem die gesamte übertragene Information iedem Teilnehmer angeboten wird, ist in einem interaktiven System die individuelle Information dem jeweiligen Teilnehmer so zuzuführen bzw. vom jeweiligen Teilnehmer so abzusetzen, daß ein unerlaubter Zugriff verhindert wird. Außerdem sind die Kanäle für die uneingeschränkte Informationsverteilung im reinen Verteilnetz den Teilnehmeranschlüssen entsprechend zuzuführen. Die se Aufgaben und auch das Abhalten möglicher Störungen aus dem Teilnehmerbereich vom Aufwärtssammelnetz erfüllt die Vorfeldeinrichtung.

Die technische Auslegung des Systems und der Anlage für interaktives Kabelfernsehen wird zum einen davon bestimmt, daß eine große Anzahl von Hörrundfunk- und insbesondere Fernsehprogrammen verteilt werden muß. Andererseits sind in weit größerer Anzahl interaktive Telekommunikationsdienste anzubieten, wobei sich gewisse Unterschiede dann ergeben, wenn Telekommunikation zwischen Teilnehmern gestattet oder nicht zugelassen ist. Das technische System wird im wesentlichen von der Dienstgüte der einzelnen Dienste und mit einem sehr hohen Gewicht vom Verkehrsangebot der Gesamtheit der Dienste beeinflußt. Durch die Unterteilung des Gesamtversorgungsgebietes in Versorgungsbereiche und die Struktur des Versorgungsnetzes ergibt sich ein äußerst wirtschaftliches Kanalangebot. Außer den unbeschränkten Verteilprogrammen können die Teilnehmer in den einzelnen Versorgungsbereichen über die zweiten autonomen Netze mit Individualprogrammen versorgt werden, die jeweils nur in den betreffenden Versorgungsbereich zu führen sind, in dem sich der betreffende Teilnehmer befindet. Für jeden Versorgungsbereich lassen sich in Abwärtsrichtung z.B.

30 Fernsehkanäle für individuelle Fernsehprogramme
12 Fernsehkanäle für Verteilprogramme
Datenkanäle—Sprachkanäle
und in Aufwärtsrichtung
4 Fernsehkanäle und
Datenkanäle—Sprachkanäle
unterbringen.

Bei einem Gesamtversorgungsgebiet, das in 10 Versorgungsgebiete gegliedert wird, läßt sich für individuelle Informationsverteilung auf diese Weise ein Kanalangebot von 300 Fernsehkanälen in Abwärtsrichtung realisieren. Die Frequenzbelegung eines solchen Übertragungssystems wird weiter unten erläutert. Es sei jedoch schon an dieser Stelle darauf hingewiesen, daß die Gliederung des Gesamtversorgungsgebietes in Versorgungsbereiche entsprechend dem Verkehrsaufkommen der Teilnehmer erfolgen sollte. Dabei ergibt sich die Anzahl der Versorgungsbereiche aus dem Verhältnis der maximal gleichzeitig zu übertragenden Individualkanäle im Gesamtnetz—zuzüglich eines Zuschlages für die Erhöhung der Erreichbarkeit zu Kanalkapazität eines Kabels.

Wenn Knotenstellen einzelner Versorgungsbereiche in unterschiedlicher Richtung von der Zentrale, jedoch mit etwa gleicher Entfernung zu ihr liegen, können auch für das gemeinsame Kabel zwischen der Zentrale und den Knotenstellen nicht gemeinsam benutzte Trassen vorgesehen werden. Diese an sich sternförmige Struktur hat jedoch nichts mit der Baumstruktur dieses autonomen Netzes zu tun. Maßgeblich für die Unterscheidung in Stern- bzw. Baumnetz ist lediglich die Versorgung des betreffenden Kabels.

Bei einer weiteren vorteilhaften Ausführungsform der Erfindung kann ein zusätzliches Kabel in der höchsten Netzebene parallel zu dem allen Versorgungsbereichen gemeinsamen Verbindungskabel zwischen den Knotenstellen und der Zentrale zur Vergrößerung des Kanalangebots insbesondere in Aufwärtsrichtung vorgesehen sein.

Auf diese Weise ist es möglich, allen Vorfeldeinrichtungen im Gesamtversorgungsgebiet für die als Aufwörtskanäle in das Netz abgesetzten Nachrichtenflüsse ein einheitliches Frequenzband zuzuordnen und Multiplexeinrichtungen in den Knotenstellen mit Umsetzern auszurüsten, die die ankommenden Nachrichtenflüsse in jeweils ein einer Knotenstelle bzw. einem Versorgungsbereich zugeordnetes eigenes Frequenzband verlagern. Die Bild- und Datenkanäle können somit innerhalb der Baumnetze der Versorgungsbereiche, die bis zu den Knotenstellen in Aufwärtsrichtung gesehen voneinander völlig unabhängig sind, im selben Frequenzband übertragen werden. Erst an den Knotenstelln, die meteinander verbunden sind, ist zur Vermeidung von Signalüberlagerungen eine Trennung dieser aus verschiedenen Versorgungsbereichen stammenden Kanäle und eine Umsetzung der Frequenzbänder in getrennte Bereiche erforderlich. Hierbei ist es zum Beispiel bezüglich der Störanfälligkeit besonders vorteilhaft, das unterste Frequenzband der am weitesten von der Zentral entfernten Knotenstelle zuzuordnen und umgekehrt. Die höheren Frequenzbänder liegen damit auf den kürzeren Verbindungen.

Wie bereits erwähnt, sollen in Abwärtsrichtung z.B. 30 individuelle Fernsehprogramme in jeden einzelnen Versorgungsbereich geführt werden. Das bedeutet, die den Versorgungsbereichen eigenen, zweiten Verbindungskabel zwischen der Zentrale und den Knotenstellen sowie die zugehörigen autonomen Kabel in den Baumnetzen der Versorgungsbereiche sind mit Einrichtungen für Nachbarkanalbelegung auszurüsten. Dazu gehören Einrichtungen wie Empfangsumsetzer, die für Vielkanal- und Nachbarkanalbelegung tauglich sind. Die gegenüber dem Netz für reine Verteilprogramme wesentlich höhere Kanalkapazität erfordert bei gleicher Übertragungsqualität z.B. den Einsatz dämpfungsärmerer Kabel und der Verstärker höherer Linearität, um eine Verringerung des Anlagenbetriebspegels und eine entsprechende Reduzierung der Reichweite des mit Nachbarkanalbelegung betriebenen Netzes gegenüber dem Kabelnetz zu vermiden, in dem z.B. nur 12 Kanäle übertragen werden. Die den Versorgungsbereichen eigenen Verbindungskabel zwischen der Zentrale und den Knotenstellen können auch verdoppelt und paarig unterteilt jeweils alternierend für die Nachbarkanäle vorgesehen sowie die Knotenstellen mit Einrichtungen zum Verkämmen der Nachbarkanäle ausgerüstet werden. Die Halbierung der Übertragungskapazität auf jedem einzelnen Kabel ermöglicht eine Anhebung des Betriebspegels gegenüber einer Nachbarkanalbelegung auf einem einzigen Kabel.

In der Zeichnung sind Ausführungsformen der Erfindung sowie Schaubilder für die Erläuterung des Übertragungssystems schematisch dargestellt. Dabei zweigen:

Fig. 1: ein Blockschaltbild eines Teiles einer Anlage für interaktives Kabelfernsehen mit Zentrale, Versorgungsnetz, Knotenstellen, Vorfeldeinrichtungen und Teilnehmeranschlüssen;

Fig. 2: ein Blockschaltbild eines Teiles einer Anlage ähnlich Fig. 1, jedoch mit einem zusätzlichen Kabel für Rückkanäle;

Fig. 3: ein Blockschaltbild einer Vorfeldeinrichtung;

Fig. 4: ein Schaubild für den Bedarf an Datenkanälen, Fernsehkanälen und Sprachkanälen in Abhängigkeit von der Tageszeit und

Fig. 5: ein Schaubild für die Organisation des Frequenzmultiplexnetzes (Frequenzplan).

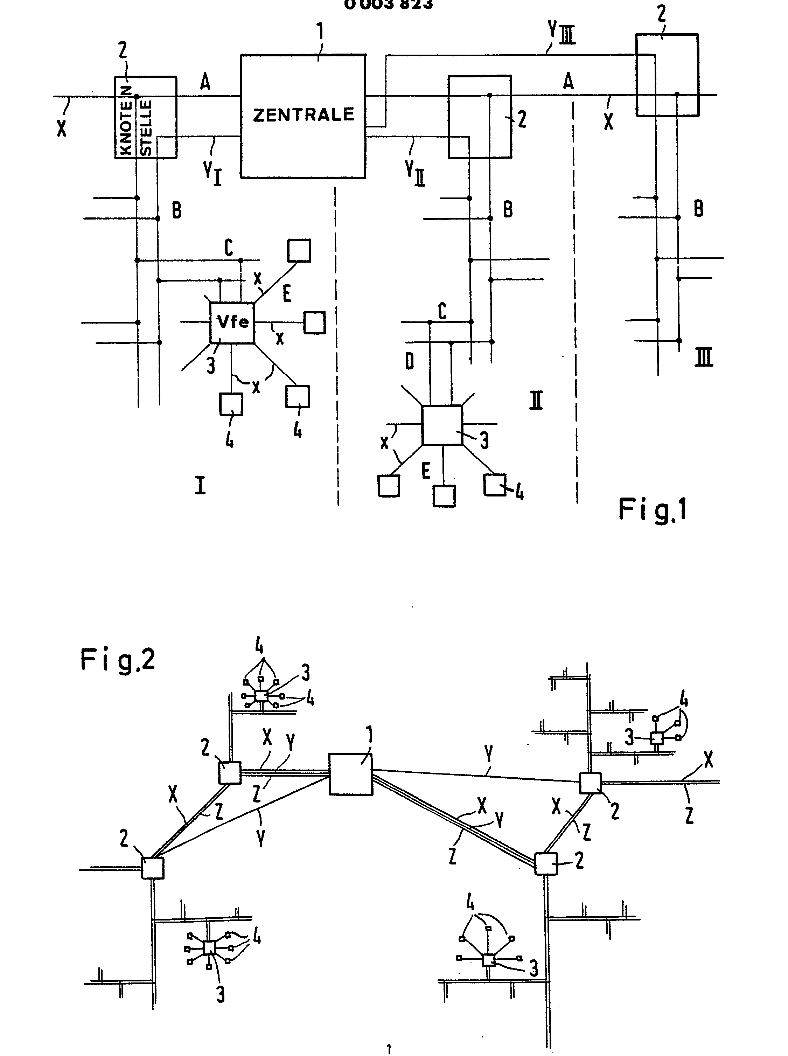

Bei der in Fig. 1 dargestellten Anlage für interaktives Kabelfernsehen führen von einer Zentrale 1 zu jeder Knotenstelle 2 ein Kabel X und ein Kabel Y. Der Anschluß der Kabel X an die Zentrale 1 ist in Baumstruktur ausgelegt. Das bedeutet, auch bei örtlich als sternförmig anzusehender Heranführung der Kabel an die Zentrale, werden die Versorgungsbereiche I, II, III ... parallel gespeist. Für jede Knotenstelle 2 ist ein eigenes Kabel Y vorgesehen. Die Netzebene zwischen der Zentrale 1 und den Knotenstellen 2 wird mit A bezeichnet. An jede Knotenstelle 2 schließt sich ein Baumnetz der Ebenen B, C und D mit parallelen autonomen Kabeln in jedem Versorgungsbereich an. Diese Baumnetze führen bis zu Vorfeldeinrichtungen 3 (Vfe). Von den Vorfeldeinrichtungen 3 führen einfache Kabel x zu den Teilnehmeranschlüssen 4. Diese teilnehmernahe Netzebene wird mit E bezeichnet.

Bei der in Fig. 2 dargestellten Anlage sind gleiche Teile mit gleichen Bezugszeichen versehen. Diese Anlage unterscheidet sich von der in Fig. 1 dargestellten Anlage dadurch, daß zwischen den Knotenstellen 2 und der Zentrale 1 ein zusätzliches Kabel Z vorgesehen ist. In diesem Fall sind die Knotenstellen 2 mit Multiplexeinrichtungen ausgerüstet.

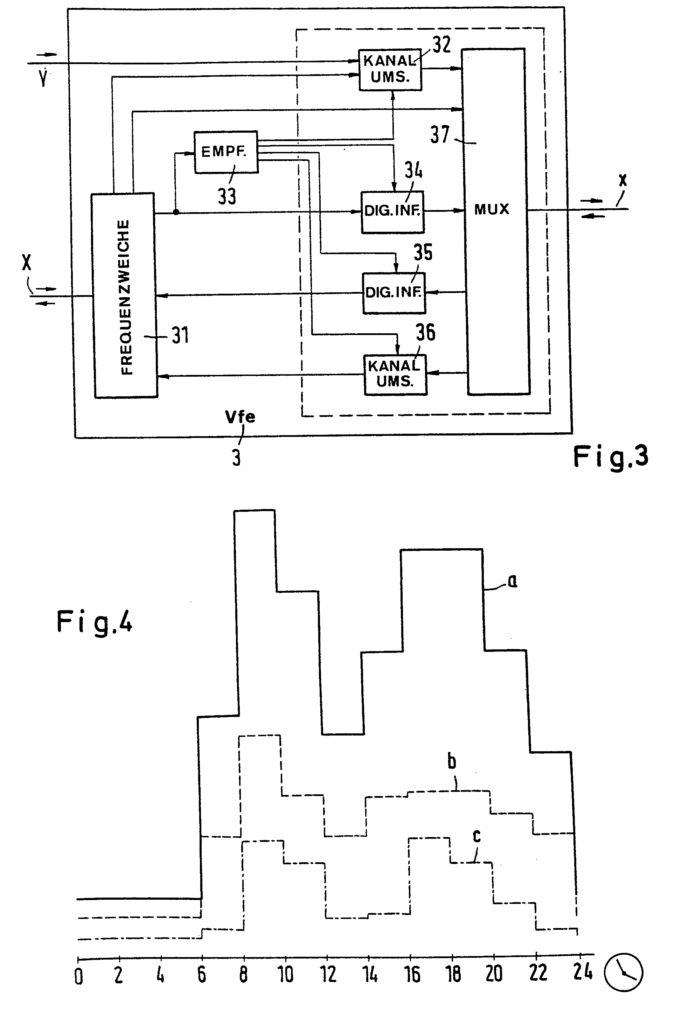

Die in Fig. 3 detaillierter dargestellte Vorfeldeinrichtung 3 (Vfe) befindet sich an der Schnittstelle zwischen dem übergeordneten Baumnetz und dem Sternnetz mit den zu den Teilnehmeranschlüssen führenden Leitungen x. Über das Kabel X werden in Verteil- und in Aufwärtsrichtung die breitbandigen Fernsehkanäle und die schmalbandigen Daten- und Sprachkanäle geführt. Hierfür ist eine Frequenzweiche 31 vorgesehen. Unmittelbar daran angeschlossen ist eine Empfangseinrichtung 33 (EMPF.) des digitalen Übertragungssystems, von der aus die folgenden Komponenten gesteuert werden, die für jeden Teilnehmeranschluß getrennt vorliegen. In Abwärtsrichtung gelangen die auf dem Kabel Y geführten individuellen Kanäle unmittelbar zu einem steuerbaren Empfangskanalumsetzer 32 (Kanal Ums.). Außerdem werden diesem Empfangskanalumsetzer 32 gegebenenfalls weitere Kanäle zugeführt, die über das Kabel X übertragen werden und keine reinen Verteilprogramme, also z.B. gebührenpflichtige Programme beinhalten. Die auf dem Kabel X übertragenen Kanäle mit den reinen Verteilprogrammen gelangen von der Frequenzweiche 31 uneingeschränkt zum Teilnehmeranschluß. Die für einen einzelnen Teilnehmer bestimmten Digitalinformationen werden ihm in einer Schalteinrichtung 34 (Dig. Inf.) ausgekoppelt. Mit der Schalteinrichtung 35 (Dig. Inf.) werden die vom Teilnehmer abgesetzten Digitalinformationen in das Netz durchgeschaltet. Die einem Teilnehmer zugewiesenen Breitbandkanäle gelangen über den steuerbaren Sendekanalumsetzer 36 (Kanal Ums.) und die Frequenzweiche 31 in das Aufwärtsnetz. Alle für einen Teilnehmer bestimmten bzw. von ihm abgesetzten Nachrichtenflüsse werden in einer Signalmultiplexeinrichtung 37 (Mux) zusammengeführt bzw. getrennt. Die Übertragung erfolgt über das zu seinem Anschluß führende Kabel x.

In Figure 4 ist über der in 24 Stunden des Tages eingeteilten Zeitachse der Bedarf der Teilnehmer eines Gesamtversorgungsgebietes an Datenkanälen a, an Fernsehkanälen b und an Sprachkanälen c aufgetragen. Die möglichen Telekommunikationsformen und ihre Nutzung, z.B. Marktauskünfte, Verbraucherberatung, Lernen, Einkauf, führen nach einer Verkehrabschätzung zu den angegebenen Verhältnissen für die gleichzeitig mit dem System in interaktiven Diensten verbundenen Teilnehmer, die mit der Anzahl der notwendigen Datenkanäle identisch ist. Bezogen auf z.B. 10.000 Teilnehmer ergibt sich ein Bedarf an 200 bis 300 Video-, ca. 1.000 Daten- und ca. 50 Sprachkanälen, wie sie durch die Graphen b, a und c dargestellt sind. Für den Bedarf an Video-Kanälen wurde vorausgesetzt, daß bei den Teilnehmern keine Video-Standbildspeicher vorgesehen sind, während eines Dialogs also Standbildinformationen ständig über einen Video-Kanal übertragen werden müssen, der dementsprechend lange Zeit belegt ist. Etwa 90% der Bildquellen im Dialogverkehr sind Standbildquellen; der Bedarf an Video-Kanälen sinkt deshalb erheblich, wenn die Teilnehmer mit Video-Standbildspeichern ausgerüstet sind und deshalb nur ein Vollbild zu übertragen ist. In Aufwärtsrichtung sind etwa 10% der Fernsehverteilkapazität vorzusehen. Für andere Teilnehmerzahlen als 10.000 gelten diese Verhältnisse entsprechend.

Die in den Fig. 1 und 2 schematisch dargestellte Anlage ist für etwa 10.000 Teilnehmer dementsprechend in 10 Versorgungsbereiche zu gliedern. Mit einer Kanalkapazität von 30 Fernsehkanälen auf dem Kabel Y und 12 Fernsehkanälen und den Daten- und Sprachkanälen in Aufwärts- und Abwärtsrichtung auf dem Kabel X ergibt sich für jeden Versorgungsbereich allein bei Berücksichtigung der breitbandigen Fernsehkanäle damit jeweils ein Zehntel des gesamten Bedarfes für das gesamte Versorgungsgebiet.

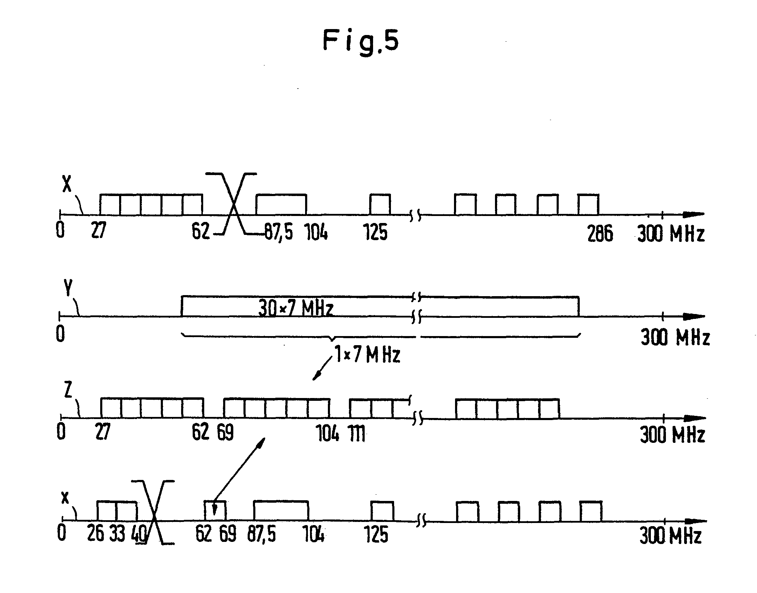

In Fig. 5 ist die Organisation des Netzes in Frequenzmultiplextechnik dargestellt. Jedes Kabel ist für eine Übertragung bis 300 MHz ausgelegt. Auf dem Kabel X wird der untere Frequenzbereich für die Übertragung von Fernseh- und Daten- bzw. Sprachkanälen in Aufwärtsrichtung benutzt. Während das Kabel Z wenn überhaupt nur in der Netzbene A vorgesehen wird, erstrecken sich die Kabel X und Y über die Netzebenen A, B, C und D.

Auf dem Kabel Y werden 30 Fernsehkanäle in Nachbarkanallage übertragen. Ein Teilnehmer, der ein individuelles Fernsehprogramm ausgewählt hat, erhält seine Informationen über einen dieser 30 Kanäle. In seiner Vorfeldeinrichtung wird dieser Kanal ausgekoppelt und ihm auf sein Kabel x gelegt. Hierfür wird in der Netzebene E ein Fernsehkanal benutzt, der in den Ebenen B, C, D durch Rückkanäle belegt ist.

Die Bild- und Daten- bzw. Sprachkanäle in Rückrichtung werden über die Leitung x in der Netzebene E und über Kabel X in den übergeordneten Netzebenen—sofern ein Kabel Z in der Ebene A vorgesehen ist: in den Netzebenen D, C und B—geführt. An der Schnittstelle der Netzebenen A und B, den Knotenstellen 2, werden sie aus dem Bereich 27 bis 62 MHz in darüber liegende Frequenzbänder, z.B. von 69 bis 104 MHz, 111 bis 146 Mhz, 153 bis 188 MHz usw. verlagert und auf dem Kabel Z bis zur Zentrale 1 geführt. Hierbei steht eine hohe Rückkanalkapazität zur Verfügung. Außerdem ergeben sich für die Netzebene A beachtliche Vorteile bei jeweils nur in einer Richtung betriebenen Leitungen. Reichen hingegen fünf breitbandige Rückkanäle aus, können diese auch in der Netzebene A im Frequenzband 27 bis 62 MHz verbleiben und auf dem Kabel X bis zur Zentrale 1 geführt werden. In diesem Zusammenhang ist noch auf eine Zwischenlösung hinzuweisen, die sich bei einer an sich sternförmigen Struktur mehrerer von der Zentrale 1 ausgehender Kabel X ergibt. Während in Abwärtsrichtung diese Kabel X in Baum-Struktur betrieben werden, können sie in Aufwärtsrichtung jeweils fünf breitbandige Rückkanäle sternförmig zur Zentrale 1 führen.

Unabhängig von den oben hervorgehobenen Varianten gilt für die Netzebene E für die Aufwärtsrichtung auf den Kabeln x eine Belegung mit Fernsehsignalen in Zwischenfrequenzlage und mit Digitalsignalen im Bereich von 26 bis 33 MHz. In den zugehörigen Vorfeldeinrichtungen werden diese Aufwärtskanäle in den Bereich zwischen 27 und 26 MHz umgesetzt. In Verteilrichtung trägt jedes Kabel x die unbeschränkt zu verteilenden Kanäle vom Kabel X und—sofern angefordert—ein aus den 30 Kanälen vom Kabel Y ausgewähltes Individualprogramm sowie die für den Teilnehmer bestimmte Digitalinformation. Der Frequenzbereich des Lang-, Mittel- und Kurzwellenrundfunks wird im Kabel x nicht belegt, so daß diese Signale in der Vorfeldeinrichtung 3 eingespeist werden können.

Die Kabel x können z.B. also Koaxialkabel oder als Lichtwellenleitung ausgebildet sein. Je nach Siedlungsstruktur werden mehrere, wenige oder auch nur einzelne Teilnehmer an eine Vorfeldeinrichtung 3 angeschlossen.

Die Daten- und Sprachsignale werden zwischen der Zentral 1 und den Teilnehmern über ein digitales zeitmultiplexes Übertragungssystem hoher Bitrate in je einem Kanal von 7 MHz Bandbreite in Aufwärtsrichtung in den Netzebenen D bis A bzw. D bis B und A über das Kabel X bzw. die Kabel X und Z und in Abwärtsrichtung normalerweise nur über das Kabel X übertragen. Falls diese Übertragungskapazität in Abwärtsrichtung für das Gesamtversorgungsgebiet nicht ausreicht, kann jedem einzelnen Versorgungsbereich über sein Kabel Y in einem der dort vorgesehenen 30 Kanäle hierfür ein eigenes digitales Übertragungssystem bereitgestellt werden.

Die Struktur des Netzes und das gesamte Übertragungssystem erlaubt ohne Schwierigkeit eine Verbindung zwischen zwei oder mehr Teilnehmern. Dazu brauchen in der Zentrale 1 nur die entsprechenden Auf- und Abwärtskanäle vermittelt zur werden. Ohne eine solche Vermittlung in der Zentrale sind Verbindungen zwischen Teilnehmern beim beschriebenen Übertragungssystem nicht möglich.

**Patentansprüche**

1. Anlage für interaktives Kabelfernsehen mit einem in Versorgungsbereiche (I, II, III...) mit je einer zugeordneten Knotenstelle (2) gegliederten Gesamtversorgungsgebiet, dessen Kabelnetz in der teilnehmernahen Netzebene (E) Sternstruktur und in teilnehmerferneren Netzebenen (A, B, C, D) zumindest teilweise Baumstruktur aufweist, gekennzeichnet durch

— eine Zentrale (1) für das Gesamtversorgungsgebiet und durch:
— eine Überlagerung von Kabelnetzen in Baum- und in Sternstruktur in der höchsten Netzebene (A) zwischen der Zentrale (1) und den Knotenstellen (2) der Versorgungsbereiche (I, II, III, ...), wobei die Baumstruktur aus einem allen Knotenstellen (2) gemeinsamen Verbindungskabel (X) und die Sternstruktur aus zweiten, vom gemeinsamen Verbindungskabel (X) sowie auch voneinander unabhängigen und für jede Knotenstelle (2) eigenen Verbindungskabeln (Y) gebildet ist,
— autonome parallele Kabel (X, Y) in Baumstruktur in den teilnehmerferneren Netzebenen (B, C, D) zwischen den Knotenstellen (2) und Vorfeldeinrichtungen (3), wobei in diesen Netzebenen (B, C, D) die Verbindungskabel (X, Y) aus der höchsten Netzebene (A) den parallelen autonomen Kabeln (X, Y) entsprechend zugeordnet sind,
— an sich bekannte Sternnetze mit Einfachkabeln (x) in der teilnehmernahen Netzebene (E) zwischen den Vorfeldeinrichtungen (3) und Teilnehmeranschlüssen (4); sowie durch:
— Mehrfachausnutzung der auf den Kabeln (X, Y, x) für Analog- bzw. Digitalsignale bereitgestellten Übertragungswege sowohl in Richtung von der Zentrale (1) zu den Teilnehmeranschlüssen (4) als auch zumindest teilweise in Richtung von den Teilnehmeranschlüssen (4) zur Zentrale (1) als Ab- bzw. Aufwärtskanäle.

2. Anlage nach Anspruch 1, gekennzeichnet durch eine Vorfeldeinrichtung (3) zwischen den autonomen parallelen Kabeln (X, Y) der teilnehmerferneren Netzebenen (B, C, D) und den Einfachkabeln (x) der Sternnetze in der teilnehmernahen Netzebene (E), die ausgerüstet ist:

— mit einer Frequenzweiche (31) und mit einem Empfangskanalumsetzer (32), die an die Kabel (X, Y) der teilnehmerferneren Netzebenen (B, C, D) angeschlossen sind,
— mit einer Signalmultiplexeinrichtung (37), die an das zum Teilnehmeranschluß (4) führende Einfachkabel (x) angeschlossen ist, und
— mit einer Empfangseinrichtung (33), Schalteinrichtungen (34, 35) und einem Sendekanalumsetzer (36) für die Selektion der für einen Teilnehmeranschluß (4) bestimmten Abwärtskanäle bzw. die Zuweisung von Aufwärtskanälen für von den Teilnehmeranschlüssen (4) in das Netz abgesetzten Nachrichtenflüsse.

3. Anlage nach Anspruch 1 oder 2, gekennzeichnet durch ein zusätzliches Kabel (Z) in der höchsten Netzebene (A), das parallel zu dem allen Versorgungsbereichen (I, II, II, ...) gemeinsamen Verbindungskabel (X) zwischen den Knotenstellen (2) und der Zentrale (1) zur Vergrößerung des Kanalangebots insbesondere in Aufwärtsrichtung vorgesehen ist.

4. Anlage nach Anspruch 3, dadurch gekennzeichnet, daß allen Vorfeldeinrichtungen (3) im Gesamtversorgungsgebiet für die als Aufwärtskanäle in das Netz abgesetzten Nachrichtenflüsse ein einheitliches Frequenzband zugeordnet ist und Multiplexeinrichtungen in den Knotenstellen (2) mit Umsetzern ausgerüstet sind, die die ankommenden Nachrichtenflüsse in jeweils ein einer Knotenstelle (2) bzw. einem Versorgungsbereich (I, II, III, ...) zugeordnetes eigenes Frequenzband verlagern.

5. Anlage nach Anspruch 4, dadurch gekennzeichnet, daß das unterste Frequenzband der am weitesten von der Zentrale (1) entfernten Knotenstelle (2) zugeordnet ist und umgekehrt.

6. Anlage nach einem der Ansprüche 1 bis 5, dadurch gekennzeichnet, daß die den Versorgungsbereichen (I, II, III, ...) eigenen, zweiten Verbindungskabel (Y) zwischen der Zentrale (1) und den Knotenstellen (2) sowie die zugehörigen autonomen Kabel (Y) in den Baumnetzen der Versorgungsbereiche (I, II, III...) mit Einrichtungen für Nachbarkanalbelegung ausgerüstet sind.

**Revendications**

1. Installation pour télévision par câble interactive avec une région de distribution totale répartie en zones de distribution (I, II, III ...) avec chacune une station nodale (2), le réseau de câbles présentant une configuration en étoile aux niveaux (E) proches des abonnés et présentant au moins partiellement une configuration ramifiée aux niveaux (A, B, C, D) éloignés des abonnés,

caractérisée par une centrale (1) pour la région de distribution totale et par:
une superposition de réseaux de câbles en configurations ramifiée et en étoile dans les niveaux supérieurs (A) de réseaux entre la centrale (1) et les stations nodales (2) des zones de distribution (I, II, III ...), la configuration ramifiée étant constituée d'un premier câble de liaison (X) commun pour toutes les stations nodales (2) et la configuration en étoile étant constituée de seconds câbles de liaison (Y) indépendants du câble de liaison commun (X) et indépendants l'un de l'autre, chacun desdits seconds câbles de liaison étant propre à une station nodale respective (2),
des câbles parallèles autonomes (X, Y) en configuration ramifiée aux niveaux de réseaux (B, C, D) situés entre les stations nodales (2) et les concentrateurs (3), les câbles autonomes (X, Y) précités étant agencés en concordance avec les câbles parallèles autonomes (X, Y) émanant des niveaux supérieurs (A),
des réseaux en étoile, connus en soi, avec des câbles simples (x) aux niveau de réseaux (E) situés entre les concentrateurs (3) et les branchements d'abonnés (4);

ainsi que par l'utilisation multiple, comme canaux descendants et comme canaux montants, des voies de transmission disponibles pour les signaux analogiques et numériques sur les câbles (X, Y, x) aussi bien dans le sens allant de la centrale (1) vers les branchements d'abonnés (4) qu'au moins partiellement dans le sens allant des branchements d'abonnés (4) vers la centrale (1).

2. Installation selon la revendication 1, caractérisée par un concentrateur (3) entre les câbles parallèles autonomes (X, Y) des niveaux de réseaux (B, C, D) et les câbles simples (x) des réseaux en étoile aux niveaux de réseaux (E), le concentrateur (3) comprenant un filtre d'aiguillage (31) et un convertisseur de canal de réception (32) connectés aux câbles (X, Y) des niveaux de réseaux (B, C, D) éloignés des abonnés, un multiplexeur de signaux (37) connecté au câble simple (x) allant au branchement d'abonné (4), et un dispositif de réception (33), des dispositifs de commutation (34, 35) et un convertisseur de canal de transmission (36) pour la sélection des canaux descendants attribués à un branchement d'abonné (4) et l'allocation de canaux montants pour les flux d'informations dérivés des branchements d'abonnés (4).

3. Installation selon l'une quelconque des revendications 1 et 2, caractérisée par un câble supplémentaire (Z) au niveau supérieur (A) de chaque zone de distribution (I, II, III ...), chaque câble supplémentaire (Z) s'étendant parallèlement au câble de liaison commun (X) entre la station nodale (2) et la centrale (1) afin d'élargir l'offre de canaux, en particulier dans le sens de trafic montant.

4. Installation selon la revendication 3, caractérisée en ce que les concentrateurs (3) dans la région de distribution totale ont une bande de fréquences uniforme pour les flux d'informations dérivés dans le réseau comme canaux montants et en ce que des multiplexeurs sont prévus dans les stations nodales (2) avec des convertisseurs qui abaissent la bande de fréquences propre des flux d'informations entrants à une station nodale (2) ou une zone de distribution (I, II, III ...).

5. Installation selon la revendication 4, caractérisée en ce que la bande de fréquences inférieure de la station nodale (2) la plus éloignée de la centrale (1) est translatée et inversement.

6. Installation selon l'une quelconque des revendications 1 à 5, caractérisée en ce que les seconds câbles de liaison (Y) entre la centrale (1) et les stations nodales (2) des zones de distribution (I, II, III ...), ainsi que les câbles autonomes correspondants dans les réseaux ramifiés des zones de distribution (I, II, III ...), sont équipés de dispositifs pour l'occupation des canaux voisins.

## Claims

1. Interactive cable television installation with an entire service area divided into service regions (I, II, III, ...) each respectively with an associated node (2), the cable network of which service region in the network plane (E) in the vicinity of the users is of star structure and in the network planes (A, B, C, D) remote from the user at least partially of tree structure, characterised by

— a central office (1) for the entire service area and by
— an overlapping of cable networks in tree- and star structure in the highest network plane (A) between the central office (1) and the nodes (2) of the service regions (I, II, III, ...), whereby the tree structure is formed from a connection cable (X) common to all nodes (2) and the star structure is formed from second connection cables (Y) independent of the common connection cable (X) and also of each other and specifically for each node (2),
— autonomous parallel cables (X, Y) in tree structure in the network planes (B, C, D) remote from the user between the nodes (2) and ramp devices (3), whereby in these network planes (B, C, D) the connection cables (X, Y) from the highest network plane (A) are correspondingly associated with the parallel autonomous cables (X, Y),
— star networks with single cables (x) known per se in the network plane (E) close to the user between the ramp devices (3) and user terminals (4) as well as by
— multiple utilisation of the transmission paths made ready on the cables (X, Y, x) for analog- or digital signals, both in the direction from the central office (1) to the user terminals (4) as well as at least partially in the direction from the user terminals (4) to the central office (1) as downwards and upwards channels.

2. Installation according to claim 1, characterised by a ramp device (3) between the autonomous parallel cables (X, Y) of the network planes (B, C, D) remote from the user and the single cables (x) of the star networks in the network plane (E) in the vicinity of the user, which is equipped:

— with a frequency filter (31) and with a receiving channel converter (32) which are connected to the cable (X, Y) of the network planes (B, C, D) remote from the user,
— with a signal multiplexing device (37) which is connected to the single cable (x) leading to the user terminal (4) and
— with a receiving device (33), switching devices (34, 35) and a transmitting channel converter (36) for the selection of the downwards channels intended for a user terminal (4) or the assignment of upwards channels for information flow fed by the user terminals (4) into the network.

3. Installation according to claim 1 or 2, characterised by an additional cable (Z) in the highest network plane (A), which is provided parallel to the connection cable (X) common to all the service regions (I, II, III, ...) between the nodes (2) and the central office (1) for increasing the channel capabilities especially in the upwards direction.

4. Installation according to claim 3, characterised in that a uniform frequency band is associated with all the ramp devices (3) in the entire service area for the information flow fed into the network as upwards channels, and multiplexing devices in the nodes (2) are provided with converters which displace the incoming information flow into a frequency band specifically assigned to a node (2) or a service region (I, II, III, ...).

5. Installation according to claim 4, characterised in that the lowest frequency band is associated with the node (2) that is furthest removed from the central office (1) and vice versa.

6. Installation according to one of claims 1 to 5, characterised in that the second connection cable (Y) specifically assigned to the service areas (I, II, III, ...) between the central office (1) and the nodes (2), and the associated autonomous cable (Y) in the tree networks of the service regions (I, II, III, ...) are equipped with devices for adjacent channel allocation.

Fig.1

Fig.2

0 003 823

Fig.3

Fig.4

# Fig.5